(19) Europäisches Patentamt
European Patent Office
Office européen des brevets

(11) **EP 2 153 896 A1**

(12) **EUROPEAN PATENT APPLICATION**

(43) Date of publication:
**17.02.2010 Bulletin 2010/07**

(51) Int Cl.:
*B01J 23/46* (2006.01)   *B01J 29/72* (2006.01)
*B01J 35/00* (2006.01)   *B01J 37/02* (2006.01)
*B01D 53/94* (2006.01)   *F01N 3/08* (2006.01)
*F01N 3/28* (2006.01)    *B01J 23/63* (2006.01)

(21) Application number: **09166556.2**

(22) Date of filing: **28.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **31.07.2008 JP 2008197311**

(71) Applicant: **Honda Motor Co., Ltd.**
**Tokyo 107-8556 (JP)**

(72) Inventors:
• **Ishimaru, Shinya**
  **Saitama 351-0193 (JP)**

• **Endo, Tetsuo**
  **Saitama 351-0193 (JP)**
• **Matsuo, Yuichi**
  **Saitama 351-0193 (JP)**
• **Hashimoto, Masanori**
  **Saitama 351-0193 (JP)**
• **Hosoe, Hiroki**
  **Saitama 351-0193 (JP)**

(74) Representative: **Trossin, Hans-Jürgen et al**
**Weickmann & Weickmann**
**Postfach 860 820**
**81635 München (DE)**

(54) **NOx purification catalyst**

(57) A NOx purification catalyst is provided capable of suppressing degradation of NOx purifying performance due to a sulfur component and efficiently purifying NOx even in cases where running is performed under low to medium temperatures. The NOx purification catalyst provided, which is used to purify NOx in exhaust gas emitted from an internal combustion engine in which lean/rich control is carried out, has a first catalyst layer that is supported on a carrier and includes a noble metal containing at least platinum as a main component, a cerium-containing material, and a lanthanum-containing material, in which NOx is oxidized and adsorbed to the first catalyst layer when made to a lean condition, and NOx oxidized and adsorbed to the first catalyst layer in a lean condition is converted into nitrogen and water when made to a rich condition by a reducing component present near the first catalyst layer.

FIG. 1

**Description**

This application is based on and claims the benefit of priority from Japanese Patent Application No. 2008-197311, filed on 31 July 2008, the content of which is incorporated herein by reference.

BACKGROUND OF THE INVENTION

Field of the Invention

The present invention relates to a NOx purification catalyst capable of efficiently purifying NOx in exhaust gas emitted from internal combustion engines, more specifically, to a NOx purification catalyst capable of efficiently purifying NOx in exhaust gas such as of diesel engines even when operated at low to medium temperatures.

Related Art

In recent years, nitrogen oxides (hereinafter referred to as "NOx") in exhaust gas, emitted from internal combustion engines such as of electric generators and automobiles, into the atmosphere, has been considered a problem in view of harmful emission control. NOx has become a cause of acid rain and oxidase smog, and there is a global trend toward regulating the emission amount thereof. Since lean combustion is carried out in internal combustion engines such as diesel engines and gasoline lean-burn engines, oxygen is abundantly present in the exhaust gas thereof. Among harmful components existing in exhaust gas of internal combustion engines, NOx is purified by a reduction reaction. As a result, it is difficult to reduce NOx in exhaust gas with a high oxygen partial pressure, and thus various investigations have been progressed to solve this. For example, a HC-SCR catalyst and a diesel particulate filter (DPF) are usually disposed in an exhaust passage of a diesel engine in a diesel vehicle. However, only the conventional combination of HC-SCR and DPF will be insufficient when reduction of NOx emission amount is further required in the future.

With respect to a method to further reduce the NOx emission amount, technology is publicly known that uses a NOx absorbent to absorb NOx when the air-fuel ratio of exhaust gas is in a lean state and to desorb the absorbed NOx in a rich state when the oxygen content in the exhaust gas is lowered. According to this technology, NOx can be efficiently purified in a way that NOx is absorbed by the NOx absorbent when in a lean condition in which it is difficult to reduce NOx, and NOx is desorbed and reduced when in a rich condition of a reducing atmosphere.

As a first method of the technology described above, a method has been investigated that uses a NOx absorption/purification catalyst combining an alkaline metal such as potassium, an alkaline earth metal such as barium, platinum, and the like (see Non-Patent Document 1, Patent Documents 1 and 2, for example). In this technology, NOx is initially oxidized and absorbed in a form of $NO_3^-$ on the NOx absorption/purification catalyst when in a lean condition by making use of oxygen. Then, a condition is created where oxygen is scarce and carbon monoxide and hydrocarbon are abundant in the exhaust gas by controlling the air-fuel ratio of the exhaust gas to a rich condition. The NOx absorbed during the lean condition is catalytically reduced and purified efficiently using the carbon monoxide and hydrocarbon in a rich state (reducing atmosphere).

As a second method of the technology described above, a method has been investigated that uses a NOx adsorption/purification catalyst combining ceria, platinum, solid acid, and the like (see Non-Patent Document 2, Patent Document 3, for example). This technology initially makes use of oxygen during a lean condition to oxidize and absorb NOx in the form of $NO_2$ on the adsorption/purification catalyst (see formulas (1) to (3) below). Then, the air-fuel ratio of exhaust gas is controlled to a rich condition to make a condition in which oxygen in the exhaust gas is scarce, thereby reacting carbon monoxide and water in the exhaust gas to generate hydrogen (see formula (4) below). Furthermore, the absorbed NOx is purified by the reaction of the resulting hydrogen and NOx, and ammonia is simultaneously generated and stored on the NOx adsorption/purification catalyst (see formula (5) below). When exposed in a lean condition again, the stored ammonia reacts with NOx in the exhaust gas, thereby efficiently reducing and purifying NOx in the exhaust gas (see formulas (6) to (8) below).

$$NO \rightarrow NO\ (ad) \quad \text{formula (1) <lean>}$$

$$2NO + O_2 \rightarrow 2NO_2\ (ad) \quad \text{formula (2) <lean>}$$

$$NO_2 \rightarrow NO_2 \text{ (ad)} \quad \text{formula (3) <lean>}$$

$$CO + H_2O \rightarrow H_2 + CO_2 \quad \text{formula (4) <rich: water-gas-shift reaction>}$$

$$5H_2 + 2NO \rightarrow 2NH_3 \text{ (ad)} + 2H_2O \quad \text{formula (5) <rich>}$$

$$4NH_3 + 4NO + O_2 \rightarrow 4N_2 + 6H_2O \quad \text{formula (6) <lean: low reactivity>}$$

$$2NH_3 + NO_2 + NO \rightarrow 2N_2 + 3H_2O \quad \text{formula (7) <lean: high reactivity>}$$

$$8NH_3 + 6NO_2 \rightarrow 7N_2 + 12H_2O \quad \text{formula (8) <lean>}$$

(In the formulas, (ad) represents adsorbed on catalyst)

Patent Document 1: Japanese Patent No. 2586738
Patent Document 2: Japanese Patent No. 2600492
Patent Document 3: PCT International Publication No. WO 2005/044426
Non-Patent Document 1: "Development of NOx storage-reduction three-way catalyst system", Society of Automotive Engineers of Japan, collected papers, Vol. 26, No. 4, October 1995
Non-Patent Document 2: "A NOx Reduction System Using Ammonia Storage-Selective Catalytic Reduction in Rich and Lean Poerations", 15. Aachener Kolloquium Fahrzeug-und Motorentechnik 2006 p. 259-270

SUMMARY OF THE INVENTION

However, the first method described above employs alkaline metals, alkaline earth metals, etc. as a NOx absorbent, and the activity of noble metals tend to degrade since such a NOx absorbent has a higher basicity. Particularly, there has been a problem in that NOx purifying performance degrades at lower temperatures. In addition, the highly basic NOx absorbent bonds more strongly with SOx, which has acidity higher than that of NOx. For this reason, there has been a problem in that a high temperature is necessary to regenerate after sulfur poisoning, and catalyst regeneration is difficult at lower temperatures. Accordingly, the first method described above obtains a predefined effect in cases of running at higher temperatures such as of gasoline engines, but obtains an insufficient NOx reduction effect in cases of running at no higher than 400°C, for example, such as that of diesel engines.

On the other hand, the second method described above has superior NOx purifying performance at lower temperatures by virtue of the ceria-containing NOx absorbent. Furthermore, regeneration can be carried out at lower temperatures after sulfur poisoning due to SOx. However, there has been a problem in that the amount of NOx adsorbable decreases at medium temperatures of 350°C to 450°C during driving under acceleration, etc. due to lower basicity.

Particularly, there has been a problem in both the first and the second methods in that NOx purifying performance degrades due to the sulfur component in the exhaust gas emitted from diesel engines. That is, in the first method described above, the sulfur component bonds to alkaline metals such as potassium and/or alkaline earth metals such as barium in the catalysts and NOx absorption performance decreases during a lean condition, a result of which NOx purification rate decreases. Although the sulfur component adsorbed to the catalysts can gradually be removed from the catalysts by heating to at least 700°C and making the exhaust gas to be in a rich condition, the catalyst thermally degrades due to exposure to a high temperature atmosphere, and consequently the NOx purification rate decreases.

Furthermore, in the second method described above, the sulfur component is adsorbed to the platinum in the catalysts, and therefore NOx adsorbed to the ceria, etc. during a lean condition cannot be reduced during a rich condition and NOx purifying capability degrades. It has been found that the sulfur component adsorbed to the platinum does not desorb even when the exhaust gas is heated to at least 750°C under a rich condition, and thus the NOx purifying performance cannot be recovered.

Accordingly, it is advantageous to develop a NOx purification catalyst that can suppress degradation of NOx purifying capability due to the sulfur component and maintain superior NOx purifying performance even in cases where operation is carried out under low to medium temperatures such as in diesel engines.

The present invention has been made in view of the problems described above, and has an object thereof to provide a NOx purification catalyst that can suppress degradation of NOx purifying performance due to the sulfur component and efficiently purify NOx even in cases where running is carried out under low to medium temperatures such as in diesel engines.

The present inventors have thoroughly investigated to solve the problems described above. As a result, focusing attention on lanthanum in particular among rare-earth elements, it has been discovered that the above problems could be solved by a NOx purification catalyst to which a lanthanum-containing material is added in at least one state of metal, oxide, and composite oxide, thereby arriving at completion of the present invention. More specifically, the present invention provides the following.

In a first aspect of the present invention, a NOx purification catalyst, which is used to purify NOx in exhaust gas emitted from an internal combustion engine in which lean/rich control is carried out, includes a first catalyst layer that is supported on a carrier and includes a noble metal containing at least platinum as a main component, a cerium-containing material, and a lanthanum-containing material, in which NOx in the exhaust gas is oxidized and adsorbed to the first catalyst layer when made to a lean condition, and NOx oxidized and adsorbed to the first catalyst layer in a lean condition is converted into nitrogen and water when made to a rich condition by a reducing component existing near the first catalyst layer.

According to a second aspect of the present invention, in the NOx purification catalyst according to the first aspect, the noble metal included in the first catalyst layer contains rhodium as an auxiliary component.

According to a third aspect of the present invention, in the NOx purification catalyst according to the first or second aspect, the content of the lanthanum-containing material included in the first catalyst per unit volume layer is 1 g/L to 100 g/L.

According to a fourth aspect of the present invention, in the NOx purification catalyst according to any one of the first to third aspects, the total content of noble metal is 0.1 g/L to 20 g/L per unit volume.

According to a fifth aspect of the present invention, in the NOx purification catalyst according to any one of the first to fourth aspects, the NOx purification catalyst further includes a second catalyst layer that is formed as a layer on or mixed with the first catalyst layer and includes a solid acid that is ion-exchanged and/or mixed with a metal and has ammonia adsorption capability, in which NOx in the exhaust gas is oxidized and adsorbed to the first catalyst layer when made a lean condition, the NOx oxidized and adsorbed to the first catalyst layer in a lean condition is converted into nitrogen, water, and ammonia when made a rich condition by a reducing component existing near the first catalyst layer and the ammonia is adsorbed to the second catalyst layer, and the ammonia adsorbed to the second catalyst layer in a rich condition reacts with NOx in the exhaust gas and is converted into nitrogen and water when made a lean condition again.

According to a sixth aspect of the present invention, in the NOx purification catalyst according to the fifth aspect, the solid acid in the second catalyst layer is at least one selected from the group consisting of β-zeolites, Y-type zeolites, ferrierites, mordenites, and MFI-type zeolites. According to the present invention, ammonia generated from the first catalyst layer during a rich period can be effectively adsorbed.

According to a seventh aspect of the present invention, in the NOx purification catalyst according to the fifth or sixth aspect, the metal in the second catalyst layer is at least one selected from the group consisting of iron, copper, cerium, and lanthanum. According to the present invention, by way of ion-exchanging and/or mixing these metals, the ammonia adsorbed in a rich period to the solid acid having ammonia adsorption capability can be converted into nitrogen and water, by NOx contained in the exhaust gas and the ammonia efficiently reacting when made lean again.

According to an eighth aspect of the present invention, in the NOx purification catalyst according to any one of the first to seventh aspects, the reducing component is at least one selected from the group consisting of carbon monoxide, hydrocarbons, and hydrogen.

According to a ninth aspect of the present invention, in the NOx purification catalyst according to any one of the first to eighth aspects, the first catalyst layer further includes a heat-resistant inorganic oxide.

According to a tenth aspect of the present invention, in the NOx purification catalyst according to the ninth aspect, the heat-resistant inorganic oxide is at least one selected from the group consisting of zirconium oxide-containing materials, alumina-containing materials, zeolite-containing materials, and silica-containing materials.

According to an eleventh aspect of the present invention, in the NOx purification catalyst according to the tenth aspect, the zirconium oxide-containing material is at least one selected from the group consisting of zirconium oxide, zirconium-containing composite oxides, and composite oxides of zirconium and a rare-earth element.

According to a twelfth aspect of the present invention, in the NOx purification catalyst according to any one of the first to eleventh aspects, the lanthanum-containing material is at least one selected from the group consisting of lanthanum metal, lanthanum oxide, lanthanum-containing composite oxides, and composite oxides of lanthanum and a rare-earth element.

According to a thirteenth aspect of the present invention, in the NOx purification catalyst according to any one of the first to twelfth aspects, the cerium-containing material is at least one selected from the group consisting of cerium metal, cerium oxide, cerium-containing composite oxides, and composite oxides of cerium and a rare-earth element.

According to a fourteenth aspect of the present invention, in the NOx purification catalyst according to any one of the first to thirteenth aspects, the content of the noble metal in the first catalyst layer decreases gradually or stepwise from a surface side to a side of the carrier.

In accordance with the first aspect of the invention, NOx in the exhaust gas is adsorbed once in the first catalyst layer while being oxidized by a noble metal such as platinum included in the first catalyst layer when the air-fuel ratio of the exhaust gas is in a lean condition. Here, a noble metal such as platinum acts as a catalytically active species to oxidize NOx (e.g., oxidization from NO to $NO_2$). Next, when the air-fuel ratio of the exhaust gas is made to a rich condition, the NOx adsorbed by the first catalyst layer reacts with a reductive component existing near the first catalyst layer and is converted into nitrogen and water.

The term "lean condition" as used herein refers to a condition in which the air-fuel ratio (A/F ratio) is high (i.e. condition of dilute fuel concentration), and the "rich condition" as used herein refers to a condition in which the air-fuel ratio (A/F ratio) is low (i.e. condition of dense fuel concentration). In addition, "low temperature" refers to lower than 350°C, "medium temperature" refers to 350°C to 450°C, and "high temperature" refers to higher than 450°C.

In the present invention, purification of NOx in the exhaust gas is promoted by containing a noble metal including platinum as a main component in the first catalyst layer. The reason is believed to be that NO, making up a large part of the exhaust gas, is oxidized to $NO_2$ by the platinum and the $NO_2$ is adsorbed onto cerium and lanthanum, thereby promoting the reaction with the reductive component.

Incidentally, there is a limit value of performance degradation with respect to degradation of NOx purification performance of platinum due to sulfur poisoning. From this viewpoint, when a lanthanum-containing material is included such as in the present invention, the period until the limit value of NOx purification performance degradation due to sulfur poisoning of platinum can be elongated (lengthening) and degradation of NOx purification performance due to sulfur components can be suppressed when compared to a case not including lanthanum-containing material. Consequently, regeneration frequency of the NOx purification catalyst can be reduced.

Furthermore, in the present invention, it is possible to adsorb NOx at higher temperatures by including the lanthanum-containing material in the first catalyst layer, which provides higher basicity than those of conventional NOx purification catalysts including cerium-containing materials. In addition, since NOx is not held by "absorbing", but rather NOx is "adsorbed" as cases of alkaline metals and alkaline earth metals, the catalytic activity of noble metal is far from degradation even in the low temperature range. Furthermore, NOx can be adsorbed at medium temperature range of 350°C to 450°C in addition to at low temperature range of below 350°C, which are suited to conventional cerium-containing materials without disturbing the properties thereof, and NOx can be purified during acceleration when the exhaust gas temperature is higher.

In accordance with the second aspect of the invention, purification of NOx in the exhaust gas is promoted by using rhodium as an auxiliary component of the noble metal. A cause is believed to be that the reaction between NOx and reductive components such as carbon monoxide, hydrocarbon, and hydrogen is promoted by the rhodium when the air-fuel ratio of the exhaust gas is in a rich condition and NOx is easily converted into nitrogen and water. In addition, a cause is also believed to be that the water-gas-shift reaction is promoted when the air-fuel ratio of the exhaust gas is in a rich condition, and thus hydrogen easily generates, resulting in NOx purifying capability being enhanced. Furthermore, rhodium exhibits superior NOx reducing capability even sulfur poisoned, and NOx reducing capability is improved after sulfur poisoning.

In accordance with the third aspect of the invention, it is possible to purify NOx at higher temperatures when compared to conventional NOx purification catalysts including cerium based materials, by including lanthanum based material in a content of at least 1 g/L per unit volume. In addition, no further effect is expected from the content of the lanthanum-containing material of above 100 g/L, and is not preferable from the viewpoint of cost and catalyst amount.

In accordance with the fourth aspect of the invention, it is possible to efficiently impart NOx purifying capability by the total content of noble metals being 0.1 g/L to 20 g/L per unit volume in the first catalyst layer. That is, NOx is efficiently oxidized and adsorbed by the action of the noble metal during the lean condition.

In accordance with the fifth aspect of the invention, the catalyst has a second catalyst layer that is formed as a layer on or mixed with the first catalyst layer and includes a solid acid containing a metal element. Consequently, in cases where the second catalyst layer is formed as a layer on the first catalyst layer, for example, NOx in the exhaust gas initially easily passes through the second catalyst layer of a solid acid catalyst of an upper layer and reaches the first catalyst layer of a lower layer when the air-fuel ratio of the exhaust gas is in a lean condition. Then, NOx is adsorbed once onto the first catalyst layer while being oxidized by a noble metal such as platinum in the first catalyst layer (temporarily stored). Here, the noble metal such as platinum acts as a catalytically active species to oxidize NOx (e.g., oxidization from NO to $NO_2$).

When the air-fuel ratio of the exhaust gas is subsequently made to a rich condition, the NOx adsorbed in the first catalyst layer reacts with hydrogen generated by the water-gas-shift reaction to be converted into ammonia, and the ammonia moves to and is adsorbed by the second catalyst layer (stored again). This storing again is easily carried out since the first catalyst layer and the second catalyst layers are formed as layers or mixed. At this time, the reaction of NOx to be converted into nitrogen and water simultaneously occurs by a reductive agent such as carbon monoxide and hydrocarbons in the exhaust gas. The NOx purification rate is improved since the conversion into ammonia by hydrogen along with the reduction reaction of NOx by carbon monoxide and hydrocarbon occur in a concerted manner.

When the air-fuel ratio of the exhaust gas returns to a lean condition again, NOx contained in the exhaust gas is converted into nitrogen and water by an ammonia-selective catalytic reduction reaction with the ammonia stored again in the second catalyst layer, and nitrogen is released from the surface of the second catalyst layer. It should be noted that the temporarily storing described above also progresses at this time in a concerted manner.

That is, in accordance with the present invention, a series of cycles of temporarily storing NOx, conversion into ammonia, storing again ammonia, reduction to nitrogen, and release of nitrogen are efficiently carried out by forming as a layer or mixing the second catalyst layer onto or with the first catalyst layer, and thus NOx can be efficiently lowered. More specifically, NOx is temporarily stored in the first catalyst layer and also ammonia stored again in the second catalyst layer is converted into nitrogen and water under a lean condition; on the other hand, the temporarily stored NOx is converted into ammonia and stored again in the second catalyst layer under a rich condition. Accordingly, NOx can be purified continuously and efficiently by repetitively carrying out lean/rich control of the exhaust gas in a predetermined cycle.

In accordance with the sixth aspect of the invention, ammonia can be effectively adsorbed from lower temperatures to medium temperatures by using at least one selected from the group consisting of β-zeolite, Y-type zeolites, ferrierites, mordenites, and MFI-type zeolites as the solid acid having ammonia adsorption capability.

In accordance with the seventh aspect of the invention, the ammonia adsorbed to the solid acid can be reacted with NOx in the exhaust gas to be efficiently converted into nitrogen and water at lower temperatures to medium temperatures by ion-exchanging or mixing at least one selected from the group consisting of iron, copper, cerium, and lanthanum with the solid acid.

Furthermore, in the present invention, when a lanthanum-containing material is included in the first catalyst layer and also lanthanum is included in the second catalyst layer, NOx can be adsorbed at still higher temperatures due to higher basicity compared to that of conventional cerium-containing β-zeolites or cerium-containing materials. In addition, as described above, since NOx is not held by "absorbing", but rather NOx is "adsorbed" such as cases of alkaline metals and alkaline earth metals, the catalytic activity of noble metal is far from degradation even in the low temperature range. Furthermore, NOx can be efficiently adsorbed at 350°C to 450°C in addition to 350°C or lower, which is suited to conventional cerium-containing materials without disturbing its properties, and NOx can be efficiently purified during acceleration when the temperature of exhaust gas is higher such as in diesel engines.

In accordance with the eighth aspect of the invention, since at least one reductive component selected from the group consisting of carbon monoxide, hydrocarbons, and hydrogen is utilized as the reductive component to reduce NOx, NOx adsorbed to the first catalyst layer can be efficiently converted into nitrogen, water, and/or ammonia under a rich condition. Here, the carbon monoxide, hydrocarbons, and hydrogen may be those contained in the exhaust gas or adsorbed onto the first catalyst layer.

In accordance with the ninth aspect of the invention, the first catalyst layer further includes a heat-resistant inorganic oxide, whereby hydrogen generation efficiency is improved by the water-gas-shift reaction at 300°C or higher. Consequently, the conversion of NOx into ammonia can be more efficiently carried out under a rich condition.

In accordance with the tenth aspect of the invention, at least one selected from the group consisting of zirconium oxide-containing materials, alumina-containing materials, zeolite-containing materials, and silica-containing materials is used as the heat-resistant inorganic oxide in addition to the cerium-containing materials and lanthanum-containing material; therefore, the NOx purification catalyst is provided with superior heat resistance. In addition, although a noble metal of catalytically active species is used by being supported on the heat-resistant inorganic oxide, in the present invention, the noble metal can be supported on the entirety of the heat-resistant inorganic oxide constituting the first catalyst layer or on a certain inorganic oxide.

According to the eleventh aspect of the invention, at least one selected from the group consisting of zirconium oxide, zirconium-containing composite oxides, and composite oxides of zirconium and rare-earth elements is used as the zirconium oxide-containing material in the first catalyst layer, whereby the catalyst acts as one to promote the water-gas-shift reaction and hydrogen generation is induced, and resulting in ammonia generation being promoted in the first catalyst layer. It should be noted that the rare earth element is preferably at least one element selected from the group consisting of praseodymium (Pr), lanthanum (La), and neodymium (Nd).

In accordance with the twelfth aspect of the invention, by using at least one selected from the group consisting of lanthanum metal, lanthanum oxide, lanthanum-containing composite oxides, and composite oxides of lanthanum and rare-earth elements as the lanthanum-containing material in the first catalyst layer, superior NOx purifying capability from lower temperatures to higher temperatures is imparted, which is a characteristic effect of lanthanum as described above. In addition, a rare-earth element similar to those described above is preferably used.

In accordance with the thirteenth aspect of the invention, by using at least one selected from the group consisting of cerium metal, cerium oxide, cerium-containing composite oxides, and composite oxides of cerium and rare-earth elements as the cerium-containing material in the first catalyst layer, the adsorption of NOx to the first catalyst layer is promoted. It should be noted that a rare-earth element similar to those described above is preferably used.

In accordance with the fourteenth aspect of the invention, the first catalyst layer is formed so that the content of the noble metal decreases gradually or stepwise from the surface side to the carrier side. As a form, the configuration may be that in which the content of the noble metal continuously decreases in the thickness direction of the layer or that the first catalyst layer is formed of multilayers of two or more layers and the content of the noble metal decreases stepwise in the layers. In addition, the form may also be that the noble metal is substantially not included in the region of the carrier side of the first catalyst layer. In the present invention adopting such a configuration, the noble metal exists abundantly at the region of the surface side of the first catalyst layer (the side to contact the second catalyst layer when having the second catalyst layer), and thus NOx oxidation under a lean condition and the generation of ammonia by the water-gas-shift reaction are dominant. On the other hand, the region of the carrier side of the first catalyst layer is a region with little or no noble metal, and thus temporary storage of NOx is dominant. NOx purification rate can be further improved by establishing a gradient to the concentration of noble metal in the first catalyst layer as in the present invention.

BRIEF DESCRIPTION OF THE DRAWINGS

FIG. 1 is a schematic view of an engine used for actual equipment aging;
FIG. 2 is a diagram illustrating lean/rich control;
FIG. 3 is a diagram showing a relation between temperature and NOx purification rate; and
FIG. 4 is a diagram showing an average of NOx purification rate after actual equipment aging.

DETAILED DESCRIPTION OF THE INVENTION

The present invention is explained in detail with respect to embodiments in the following. In the description of a second embodiment, explanations regarding configurations common to a first embodiment are abbreviated.

First Embodiment

Overall Configuration of NOx Purification Catalyst

The NOx purification catalyst according to the present embodiment is configured with only a first catalyst layer that is supported on a carrier and includes a noble metal containing at least platinum as a main component, the cerium-containing material, and the lanthanum-containing material.

First Catalyst Layer

Constituent Component

A noble metal such as platinum, the cerium-containing material, and the lanthanum-containing material are added to the first catalyst layer. For this reason, superior NOx purifying performance is imparted by a synergetic effect of the noble metal such as platinum, the cerium-containing material, and the lanthanum-containing material. In this way, regarding reasons for which the NOx purifying performance is improved, it is believed to result from prevention of platinum poisoning by reducing components and adsorption action of NOx.

Cerium metal, cerium oxide, and cerium-containing composite oxides can be exemplified as the cerium-containing material used in the present embodiment, and various auxiliary materials may be added to these oxides. Cerium-zirconium composite oxides can be exemplified as the cerium-containing composite oxide, and in the case of using cerium-zirconium composite oxides, at least 10% by mass of cerium oxide as expressed by conversion to oxide in composite oxide is preferably contained therein, more preferably at least 30% by mass, and most preferably at least 50% by mass.

Composite oxides of cerium and a rare earth element, prepared by adding a rare earth element such as praseodymium, neodymium, and samarium as an additive to cerium, are preferably used among the cerium-containing composite oxides. It is preferred that the additive is incorporated into the crystal structure of the cerium-containing material and stably exists in the state of a metal or oxide. The heat resistance and durability of the cerium-containing material can be improved by existing in such a manner.

It should be noted that the cerium-containing material used in the present embodiment may be a commercially available cerium-containing material or obtained by a publicly known production method.

The lanthanum-containing material used in the present embodiment may be a lanthanum element, lanthanum oxide, and lanthanum-containing composite oxides, and various auxiliary materials may be added to these oxides. A lanthanum-cerium composite oxide can be exemplified as the lanthanum-containing composite oxide, and in a case of using a lanthanum-cerium composite oxide, at least 10% by mass of lanthanum oxide as expressed by conversion to oxide in composite oxide is preferably contained, more preferably at least 30% by mass, and most preferably at least 50% by mass.

Composite oxides of lanthanum and a rare earth element, prepared by adding a rare earth element such as cerium, praseodymium, neodymium, and samarium as an additive to lanthanum, are preferably used among the lanthanum-containing composite oxides. It is preferred that the additive is incorporated into the crystal structure of the lanthanum-containing material and stably exists in a state of a metal or an oxide. The heat resistance and durability of the lanthanum-containing material can be improved by existing in such a manner.

It should be noted that the lanthanum-containing material used in the present embodiment may be a commercially available lanthanum-containing material or obtained by a publicly known production method.

It is preferred that a heat-resistant inorganic oxide other than cerium-containing and lanthanum-containing materials is added to the first catalyst layer. Zirconium oxide-containing materials, alumina-containing materials, zeolite-containing materials, and silica-containing materials can be exemplified as the heat-resistant inorganic oxide. Zirconium oxide and zirconium-containing composite oxides can be exemplified as the zirconium oxide-containing material, and among others, composite oxides of zirconium and a rare earth are preferably used, and more preferably composite oxides such as Zr-Nd-Ox are used.

The first catalyst layer includes a noble metal as a catalytically active species, the cerium-containing material, and the lanthanum-containing material, and preferably includes a cerium-containing material that supports a noble metal and a lanthanum-containing material that supports a noble metal. Furthermore, a zirconium-containing material that supports a noble metal is also more preferably included. As the noble metal, one may be used that includes platinum as a main component from the viewpoint of higher reactivity, and preferably, one may be used that includes rhodium as an auxiliary component. Furthermore, one may be used that include gold, palladium, etc. as an auxiliary component other than rhodium.

As a reason for which purification of NOx in the exhaust gas is promoted by using platinum, it is believed that NO, which makes up a majority of the exhaust gas, is oxidized to $NO_2$ by the action of the platinum, and the reaction with a reducing component is promoted by this $NO_2$ being adsorbed onto cerium and lanthanum components.

Furthermore, the reaction between NOx and reducing components such as carbon monoxide, hydrocarbon, and hydrogen is promoted by using the rhodium as an auxiliary component when the air-fuel ratio of the exhaust gas is made to a rich condition, whereby NOx purifying capability is improved. This is believed to be due to the amount of ammonia generated increasing as a result of the water-gas-shift reaction being promoted and hydrogen being easily generated when the air-fuel ratio of the exhaust gas is made to a rich condition.

Regarding support of these noble metals, although it is possible to be supported on the entire of the heat-resistant inorganic oxides in addition to the cerium- or lanthanum-containing materials constituting the first catalyst layer, they may be supported on a certain inorganic oxide. The certain inorganic oxide is preferably one having a high specific surface area and superior heat resistance; for example, $\gamma$-alumina is preferably used.

Content of Each Constituent Component

The total content of the noble metal, which is a catalytically active species included in the first catalyst layer, per unit volume of the first catalyst layer is preferably 0.1 g/L to 20 g/L, and more preferably 1 g/L to 10 g/L. If the total content of the noble metal is at least 0.1 g/L, NOx purifying capability can be imparted, and further improvement in effect by exceeding 20 g/L is unlikely.

When a noble metal other than platinum is used together as a catalytically active species, the amount of platinum is preferably at least 50% by mass based on the total amount of noble metal, and more preferably at least 70% by mass.

In the present embodiment, the first catalyst layer is preferably configured so that the content of the noble metal decreases gradually or stepwise from the surface side to the carrier side. As a form, the configuration may be that in which the content of the noble metal continuously decreases in the thickness direction of the layer or that in which the first catalyst layer is formed of multiple layers of two or more layers and the noble metal content of each layer decreases stepwise. In addition, the form may also be that in which a noble metal is not substantially included at a region of a carrier side of the first catalyst layer.

It is preferred that the total content of the cerium-containing material, lanthanum-containing material, and heat-resistant inorganic oxide, which are contained in the first catalyst layer, per unit volume of the entire first catalyst layer is 10 g/L to 300 g/L. If the total content is at least 10 g/L, the noble metal can be supported in an amount capable of imparting NOx purifying capability, and if the total content is no higher than 300 g/L, the permeability of the exhaust gas can be sufficiently maintained.

The content of the cerium-containing material per unit volume of the entire first catalyst layer is preferably 1 g/L to 300 g/L, and more preferably 10 g/L to 200 g/L. If the content of the cerium-containing material is at least 1 g/L, NOx purifying capability can be sufficiently imparted, and if the content is no higher than 300 g/L, the permeability of the exhaust gas can be sufficiently maintained. It should be noted that, in a case where cerium oxide and the cerium-containing composite oxide are used together, the proportion thereof is preferably in a range of 0 to 50 parts by mass of the cerium-containing composite oxide to 100 to 50 parts by mass of the cerium oxide.

The content of the lanthanum-containing material per unit volume of the entire first catalyst layer is preferably 1 g/L to 100 g/L, and more preferably 10 g/L to 80 g/L. If the content of the lanthanum-containing material is at least 1 g/L, NOx purifying capability can be sufficiently imparted, and if the content is no higher than 100 g/L, the permeability of the exhaust gas can be sufficiently maintained. It should be noted that, in a case where lanthanum oxide and the lanthanum-containing composite oxide are used together, the proportion is preferably in a range of 0 to 50 parts by mass of the lanthanum-containing composite oxide to 100 to 50 parts by mass of the lanthanum oxide.

The content of the zirconium oxide-containing material per unit volume of the entire first catalyst layer is preferably 1 g/L to 300 g/L, and more preferably 10 g/L to 200 g/L. If the content of the zirconium oxide-containing material is at least 1 g/L, NOx purifying capability can be sufficiently imparted, and if the content is no higher than 300 g/L, the permeability of the exhaust gas can be sufficiently maintained. It should be noted that, in a case where zirconium oxide and the zirconium-containing composite oxide are used together, the proportion thereof is preferably in a range of 0 to 50 parts by mass of the zirconium-containing composite oxide to 100 to 50 parts by mass of the zirconium oxide.

Other Components

Heat-resistance improving components or strength improving components such as alumina and silica or adhesion improving components such as binders may be compounded into the first catalyst layer as other components in a range which does not impair the effect of the present invention. Zirconia-containing compounds, alumina-containing compounds, silica-containing compounds and the like can be exemplified as the binder.

It should be noted that the carrier may be a conventional one without particular limitation. For example, a honeycomb structure made of cordierite is preferably used. The method to produce the NOx purification catalyst according to the present embodiment is not particularly limited, and may be a publicly known method. More specifically, a slurry containing the materials to constitute the NOx catalyst is prepared, the slurry is coated on a carrier in an intended amount by a wash-coating method, after which the NOx purification catalyst is produced by drying and calcinating.

Second Embodiment

Overall Configuration of NOx Purification Catalyst

The NOx purification catalyst according to the present embodiment is configured with: a first catalyst layer that is supported on a carrier and includes the noble metal, the cerium-containing material, and the lanthanum-containing material; and a second catalyst layer that is formed as a layer on the first catalyst layer and includes a β-zeolite containing at least one element selected from the group consisting of iron, cerium, and lanthanum. It should be noted that, with regards to the first catalyst layer and the carrier, those similar to the first embodiment are used. Furthermore, with regards to the production method of the catalyst as well, a method similar to the first embodiment may be used.

Second Catalyst Layer

Constituent Component

In the NOx purification catalyst of the present embodiment, it is preferred that the second catalyst layer is used as the outermost surface layer that directly contacts the exhaust gas. It is also preferred that the second catalyst layer includes substantially no platinum component, and more preferably no noble metal component.

The second catalyst layer includes at least one selected from the group consisting of β-zeolites, Y-type zeolites, ferrierites, mordenites, and MFI-type zeolites as the solid acid having ammonia adsorption capability. In addition, the solid acid that is used in the present embodiment includes at least one element selected from the group consisting of iron, copper, cerium, and lanthanum.

The capability to purify exhaust gas, in particular NOx purifying capability, is improved by adding at least one element selected from the group consisting of iron, copper, cerium, and lanthanum to the solid acid. Regarding the iron element and copper element, it is believed that adsorption of NOx and/or a reducing component is promoted. Regarding the cerium element and lanthanum element, it is also believed that NOx adsorption is promoted due to oxygen storage/ release capability of these elements as well as catalyst poisoning by reducing components being suppressed due to the oxygen storage/release capability. By using a solid acid that contains these four elements being used in this way, a more superior effect is imparted as a NOx purification catalyst due to a synergetic effect.

A commercially available solid acid to which iron, copper, cerium, and/or lanthanum have been added may be used as the solid acid that is employed in the present embodiment. In addition, preparation can be carried out by adding a salt solution of iron, copper, cerium, and/or lanthanum to the solid acid. The condition in which iron, copper, cerium, and/or lanthanum element is ion-exchanged to cation sites of the solid acid can be derived by preparing in this way, thereby making it possible to improve the NOx purifying performance. One reason is believed to be that the skeletal structure of the solid acid is stabilized by the ion exchange.

Content of Each Constituent Component

The content of the solid acid, which is contained in the second catalyst layer can be appropriately set, and although it is not particularly limited, it is preferably 5 g/L to 300 g/L per unit volume of the entire second catalyst layer, and more preferably 30 g/L to 150 g/L. If the content of the solid acid is at least 5 g/L, the exhaust gas purifying capability can be sufficiently imparted, and if the content is no higher than 300 g/L, the permeability of the exhaust gas can be sufficiently maintained.

It is preferred that the content of the iron element added to the solid acid is 0.1 % by mass to 10% by mass based on the solid acid as expressed by conversion to oxide, and more preferably 0.5% by mass to 5% by mass. When the content exceeds 10% by mass, the number of active solid acid sites cannot be maintained, and the activity may decrease or the heat resistance may lower. If the content is at least 0.1 %, sufficient NOx purifying capability can be obtained.

In a case where further cerium element is added, it is preferred that the content of the cerium element added to the solid acid is 0.05% by mass to 5% by mass based on the solid acid as expressed by conversion to oxide, and more preferably 0.1% by mass to 3% by mass. If the content is at least 0.05% by mass, catalyst poisoning by reducing components in the exhaust gas can be prevented. When the content is above 5% by mass, the number of active solid acid sites cannot be maintained, and the activity may decrease or the heat resistance may lower.

When the lanthanum element is further added, it is preferred that the content of the lanthanum element added to the solid acid is 0.05% by mass to 5% by mass based on the solid acid as expressed by conversion to oxide, and more preferably 0.1 % by mass to 3% by mass. If the content is at least 0.05% by mass, catalyst poisoning by reducing components in the exhaust gas can be prevented. When the content is above 5% by mass, the number of active solid acid sites cannot be maintained, and the activity may decrease or the heat resistance may lower.

Operation of NOx Purification Catalyst

NOx reducing action by the NOx purification catalyst of the embodiments described above is explained in the following. An example of a NOx purification catalyst according to the first embodiment is shown in Table 1, and an example of the NOx purification catalyst according to the second embodiment is shown in Table 2. The NOx purification catalyst of Table 1 is a NOx purification catalyst of a one-layer configuration used in Example 1 described later, and the NOx purification catalyst of Table 2 is a NOx purification catalyst of a two-layer configuration used in Example 2 described later. It should be noted that the upper layer of Table 2 corresponds to the second catalyst layer and the lower layer corresponds to the first catalyst layer.

Table 1

| Component | Proportion (g/L) |
|---|---|
| Pt | 5.5 |
| $CeO_2$ | 90 |
| $La_2O_3$ | 30 |
| Ce-Pr-La-Ox | 90 |
| Zr-Nd-Ox | 50 |
| $Al_2O_3$ | 30 |

Table 2

| | Component | Proportion (g/L) |
|---|---|---|
| Upper layer | Fe, Ce, and La ion-exchanged β-zeolite | 75 |
| | $Al_2O_3$ | 7 |
| | Binder | 8 |
| Lower layer | Pt | 5.5 |
| | $CeO_2$ | 60 |
| | $La_2O_3$ | 30 |
| | Ce-Pr-La-Ox | 60 |
| | Zr-Nd-Ox | 20 |
| | $Al_2O_3$ | 30 |

Operation at Low Temperatures (below 350°C)

NOx Purification Catalyst of First Embodiment

Initially, when the air-fuel ratio of the exhaust gas is made to a lean condition (normal running condition for diesel engines), NOx is oxidized (e.g., oxidation from NO to $NO_2$) by action of Pt in the first catalyst layer and adsorbed onto the first catalyst layer to be temporarily stored. At this time, Pt performs as a NO oxidation catalyst, and $CeO_2$, $La_2O_3$, and/or Ce-Pr-La-Ox perform as a NOx adsorbent.

When the air-fuel ratio of the exhaust gas is subsequently made to a rich condition, NOx adsorbed on the first catalyst layer in a lean condition is reduced by the reductive gas in the exhaust gas under a rich condition (see formulas (9) to (11) below). NOx is purified by cycling the lean and rich conditions described above.

$$NOx + HC \rightarrow N_2 + H_2O + CO_2 \quad \text{formula (9)}$$

$$NOx + CO \rightarrow N_2 + CO_2 \quad \text{formula (10)}$$

$$NOx + H_2 \rightarrow N_2 + H_2O \quad \text{formula (11)}$$

NOx Purification Catalyst of Second Embodiment

Initially, when the air-fuel ratio of the exhaust gas is made to a lean condition (normal running condition for diesel engines), NOx in the exhaust gas passes through the upper layer (second catalyst layer) and reaches the lower layer (first catalyst layer). Then NOx, which has reached the lower layer (first catalyst layer), is oxidized (e.g., oxidation from NO to $NO_2$) by action of Pt and adsorbed onto the lower layer (first catalyst layer) to be temporarily stored. At this time, Pt functions as a NO oxidation catalyst, and $CeO_2$, $La_2O_3$, and Ce-Pr-La-Ox function as a NOx adsorbent.

When the air-fuel ratio of the exhaust gas is subsequently made to a rich condition, NOx adsorbed on the lower layer (first catalyst layer) in a lean condition is converted into ammonia (see formula (13) below) by the action of hydrogen generated from the water-gas-shift reaction (see formula (12) below) and also the ammonia moves to and is adsorbed by the upper layer (second catalyst layer) to be stored again. At this time, Pt/Zr-Nd-Ox and $Pt/CeO_2$ function as a water-gas-shift catalyst, Pt functions as an ammonia generating catalyst, and Fe, Ce, and/or La ion-exchanged β-zeolite functions as an ammonia adsorbent. Similarly to the NOx purification catalyst of Table 1 (first embodiment), the reduction of NOx is also carried out by the reducing gas contained in the exhaust gas under a rich condition (see formulas (9) to (11) above) at the same time.

$$CO + H_2O \rightarrow H_2 + CO_2 \quad \text{formula (12)}$$

$$NOx + H_2 \rightarrow NH_3 \quad \text{formula (13)}$$

When the air-fuel ratio of the exhaust gas is made to a lean condition again, ammonia stored again in the upper layer (second catalyst layer) and NOx contained in the exhaust gas react by an ammonia-selective catalytic reduction reaction (NH$_3$-SCR) to be converted into nitrogen (see formula (14) below), and the nitrogen can be released from the surface of the upper layer (second catalyst layer). At this time, Fe, Ce, and/or La ion-exchanged β-zeolite functions as a NH$_3$-SCR catalyst. NOx is purified by cycling the lean and rich conditions described above.

$$NOx + NH_3 + O_2 \rightarrow N_2 + H_2O \quad \text{formula (14)}$$

Operation at Medium Temperatures (350°C to 450°C)

NOx Purification Catalyst of First Embodiment

Initially, when the air-fuel ratio of the exhaust gas is made to a lean condition (normal running condition for diesel engines), NOx is oxidized (e.g., oxidation from NO to NO$_2$) by the action of Pt in the first catalyst layer and adsorbed into the first catalyst layer to be temporarily stored. At this time, Pt functions as a NO oxidation catalyst, and La$_2$O$_3$ and Ce-Pr-La-Ox function as a NOx adsorbent. It should be noted that, contrary to low temperature range, CeO$_2$ does not perform as a NOx adsorbent.

When the air-fuel ratio of the exhaust gas is subsequently made to a rich condition, NOx adsorbed by the first catalyst layer in a lean condition is reduced by the reducing gas contained in the exhaust gas under rich condition (see formulas (9) to (11) below). NOx is purified by cycling the lean and rich conditions described above.

NOx Purification Catalyst of Second Embodiment

Initially, when the air-fuel ratio of the exhaust gas is made to a lean condition (normal running condition for diesel engines), NOx in the exhaust gas passes through the upper layer (second catalyst layer) and reaches the lower layer (first catalyst layer). Then NOx, which has reached the lower layer (first catalyst layer), is oxidized (e.g., oxidation from NO to NO$_2$) by the action of Pt and adsorbed onto the lower layer (first catalyst layer) to be temporarily stored. At this time, Pt functions as a NO oxidation catalyst, and La$_2$O$_3$ and Ce-Pr-La-Ox function as a NOx adsorbent. It should be noted that, contrary to the low temperature range, CeO$_2$ does not function as a NOx adsorbent.

When the air-fuel ratio of the exhaust gas is subsequently made to a rich condition, NOx adsorbed on the lower layer (first catalyst layer) in a lean condition is converted into ammonia (see formula (13) below) by action of hydrogen generated from the water-gas-shift reaction (see formula (12) below) and also the ammonia moves to and is adsorbed on the upper layer (second catalyst layer) to be stored again. At this time, Pt/Zr-Nd-Ox and Pt/La$_2$O$_3$ function as a water-gas-shift catalyst, Pt functions as an ammonia generating catalyst, and Fe, Ce, and/or La ion-exchanged β-zeolite functions as an ammonia adsorbent. Similarly to the NOx purification catalyst of Table 1 (first embodiment), the reduction of NOx is also carried out by the reducing gas contained in the exhaust gas under a rich condition (see formulas (9) to (11) above) at the same time.

When the air-fuel ratio of the exhaust gas is made to a lean condition again, ammonia stored again in the upper layer (second catalyst layer) and NOx contained in the exhaust gas react by an ammonia-selective catalytic reduction reaction (NH$_3$-SCR) to be converted into nitrogen (see formula (14) below), and the nitrogen can be released from the surface of the upper layer (second catalyst layer). At this time, Fe, Ce, and/or La ion-exchanged β-zeolite perform as a NH$_3$-SCR catalyst. NOx is purified by cycling the lean and rich conditions described above.

It should be noted that, in the embodiment described above, although the present invention is exemplified by an example applying to diesel internal combustion engines, the present invention can also be applied to gasoline internal combustion engines. Furthermore, the present invention can be applied to engines for nautical propulsion machinery such as an outboard engine in which the crank shaft is arranged in a vertical direction.

EXAMPLES

Hereinafter, the present invention is explained with respect to examples.

Example 1

Preparation of NOx Purification Catalyst

The NOx purification catalyst of a one-layer configuration shown in the above Table 1 was prepared in accordance with a publicly known slurry method. More specifically, the materials to configure the first catalyst layer were mixed with an aqueous medium using a ball mill to prepare a slurry. When preparing the slurry, a dinitro diammine platinum aqueous solution was mixed along with the materials. The resulting slurry was coated on a carrier shown below by a wash-coating method so as to make the proportions shown in Table 1 for each component. Then, the NOx purification catalyst was prepared by drying and calcinating under the drying and calcinating conditions shown below.

Carrier

    size: 105.7 mmΦ by 114.3 mm (1000 cc)
    wall thickness: 4.3 mil
    material: made of cordierite
    shape: flow through-type honeycomb structure

Drying/Calcinating Conditions

    drying condition: 120°C (in atmospheric air)
    drying period: 1 hour
    calcination apparatus: electric furnace
    calcination temperature: 450°C
    calcination period: 2 hours

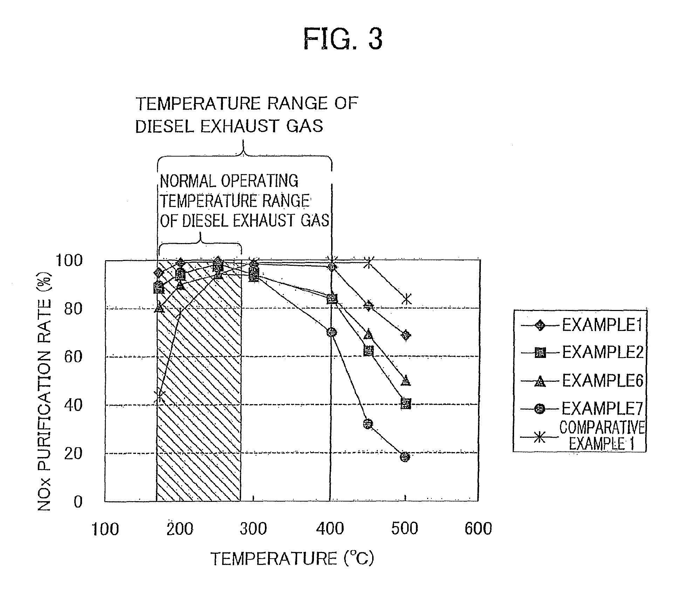

The catalyst was prepared using the method described above and NOx purification rate was measured using the method described in Evaluation below. The results are shown in FIG. 3. It should be noted that the NOx purification rate is defined as the equation (1) below.

$$\text{Anox (\%)} = (\text{Cnox in} - \text{Cnox out})/\text{Cnox in} \times 100 \quad \text{equation (1)}$$

In the equation (1), "Anox" represents NOx purification rate, "Cnox in" represents NOx concentration at catalyst inlet, and "Cnox out" represents NOx concentration at catalyst outlet.

Evaluation

NOx purifying performance was evaluated under the test conditions shown below with respect to the NOx purification catalysts prepared in the Examples and Comparative Examples.

Measurement Conditions

catalyst temperature: 170°C, 200°C, 250°C, 300°C, 350°C, 400°C, 450°C, and 500°C (eight in total)
lean/rich cycle: 55 seconds/5 seconds

Gas Conditions

lean condition: $O_2$=6%, $CO_2$=6%, $C_3H_6$=500 ppm, CO=900 ppm, NO=110 ppm, $H_2O$=7%, balance=$N_2$
rich condition: $O_2$=0%, $CO_2$=6%, $C_3H_6$=500 ppm, CO=2%, NO=2%, $H_2O$=7%, balance=$N_2$

Example 2

Preparation of NOx Purification Catalyst

The NOx purification catalyst of a two-layer configuration shown in the above Table 2 was prepared in accordance with a publicly known slurry method. More specifically, the constituent materials are mixed along with an aqueous medium using a ball mill to prepare each slurry for the lower layer (first catalyst layer) and the upper layer (second catalyst layer), respectively. It should be noted that, in preparing the slurry of the lower layer (first catalyst layer), a dinitro diammine platinum aqueous solution was mixed along with the materials. The slurry for the lower layer (first catalyst layer) and the slurry for the upper layer (second catalyst layer) were coated in order on a carrier similar to the carrier used in Example 1 by a wash-coating method so as to make the proportions shown in Table 2 for each component. Thereafter, the NOx purification catalyst was prepared by drying and calcinating under the drying and calcinating conditions shown below. The catalyst was prepared using the method described above and NOx purification rate measured using the method described in Evaluation described above. The results are shown in FIG. 3.

Example 3

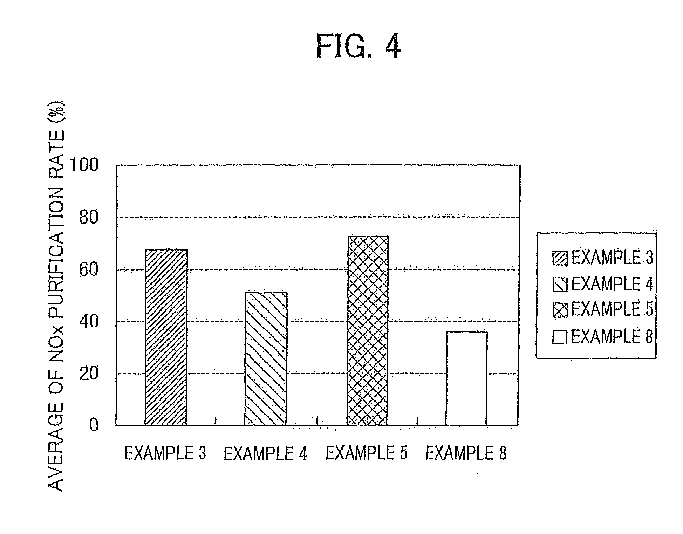

The NOx purification catalyst of a one-layer configuration shown in Table 3 was prepared by processing similar to that of Example 1. After the NOx purification catalyst was aged under the conditions of actual equipment aging described below, the NOx purifying performance was evaluated under the conditions of Evaluation described above. Average values of NOx purification rates at 200°C, 300°C and 400°C are shown in FIG. 4. It should be noted that the actual equipment aging hereinafter was carried out by a method described below unless indicated specifically.

Table 3

| Component | Proportion (g/L) |
|---|---|
| Pt | 5.5 |
| $CeO_2$ | 90 |
| $La_2O_3$ | 30 |
| Ce-Pr-La-Ox | 90 |
| Zr-Nd-Ox | 50 |
| $Al_2O_3$ | 30 |

Condition of Actual Equipment Aging

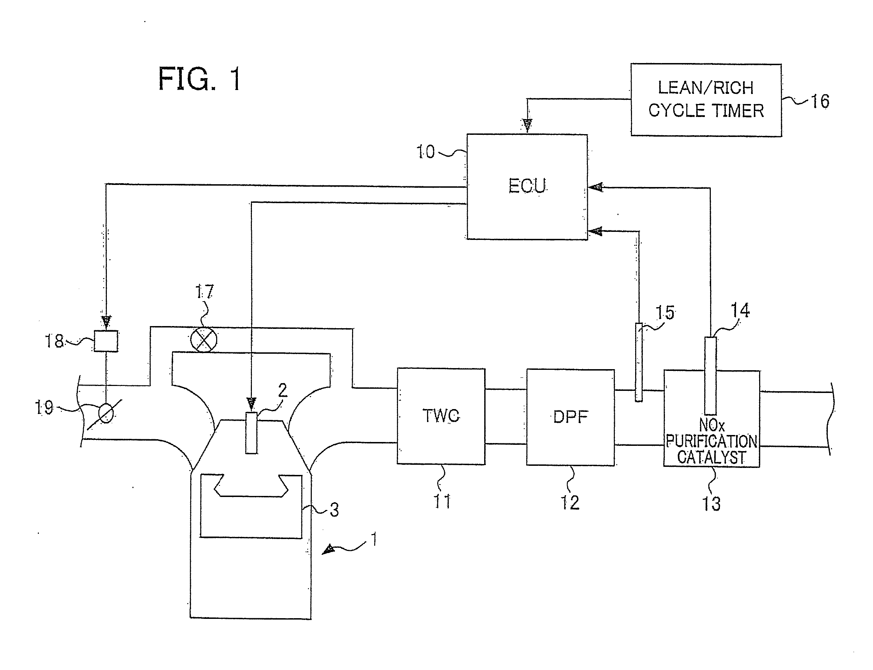

A schematic view of an engine 1 used for actual equipment aging is shown in FIG. 1. The engine 1 used has a configuration to cycle normal lean combustion and rich combustion using post injection. A butterfly-type throttle 19 having lower resistance during fully open condition was used as the throttle 19. A multi-stage injection-type injector 2 was used that can further inject fuel even in a combustion stroke and an exhaust stroke, after the injector 2 injects fuel in a compression stroke. The A sensor 15 was installed in front of the NOx purification catalyst 13, and the characteristic voltage thereof changes in response to the air-fuel ratio in front of the NOx purification catalyst 13. The voltage value output is transformed to a $\lambda$ value to be input into the ECU 10. The temperature sensor 14 is installed in order to measure the central temperature of the NOx purification catalyst 13. As for the TWC 11 and DPF 12, conventional ones (commercially available products) are installed.

The control to change lean and rich periods is explained in the following. Normal running is carried out without particularly closing the throttle 19 during a lean period. Rich running is carried out by adjusting the period ratio of lean/rich to be 3/1. Here, when the engine 1 judges to carry out the rich operation, the new air amount is initially limited by narrowing the throttle 19. Then, the fuel injection amount is controlled in the exhaust stroke so that the value in the A sensor 15, which is in front of the NOx purification catalyst 13, becomes 0.965. When the $\lambda$ value is below 0.965 (becomes more rich), the post injection amount is decreased, and when the A value is above 0.965 (becomes more lean), the post injection amount is increased. After passing the rich condition, the throttle 19 is opened to return to normal lean running.

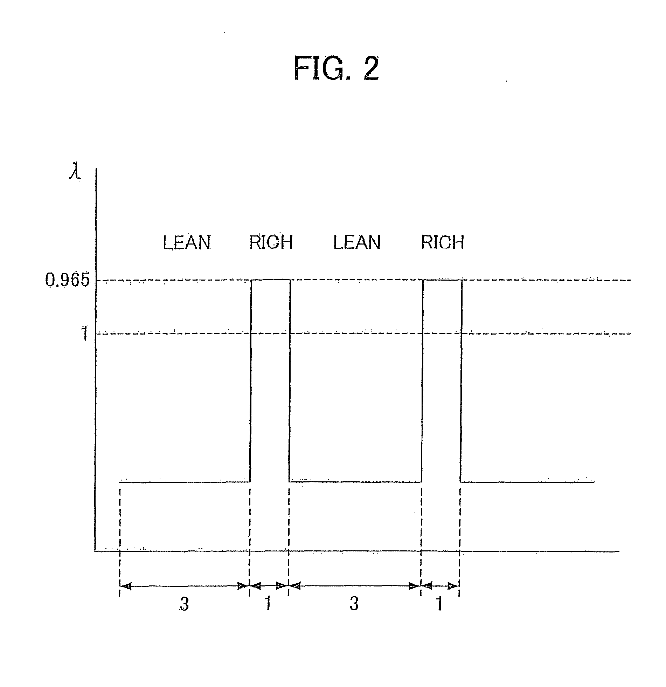

A schematic view of rich and lean cycling is shown in FIG. 2. Such lean and rich conditions are consistently cycled during aging. Fuel injection is also carried out in the exhaust stroke after normal combustion in order to maintain the temperature of the NOx purification catalyst 13 during the lean condition. The fuel reacts with remaining oxygen during combustion in the TWC 11 and generates heat in the TWC 11, thereby preventing a temperature drop of the NOx purification catalyst 13. Therefore, when the temperature of the NOx purification catalyst 13 drops, the injection amount increases, and when the temperature of the NOx purification catalyst 13 excessively rises, the injection amount decreases. It should be noted that, usual PID control is employed for the control of post injection amount to make the λ of a rich condition constant and for the control of post amount to maintain the temperature of the NOx purification catalyst 13 of a lean condition. The temperature of the NOx purification catalyst 13 can be maintained at 605±10°C due to the control. Light oil fuel with a sulfur content of 0.0008% by mass was used in this aging.

Example 4

The NOx purification catalyst of a one-layer configuration shown in Table 4 was prepared in accordance with processing similar to that of Example 1. After the NOx purification catalyst was aged under the conditions of actual equipment aging described above, the NOx purifying capability was evaluated under the conditions of Evaluation described above. Average values of NOx purification rates at 200°C, 300°C and 400°C are shown in FIG. 4.

Table 4

| Component | Proportion (g/L) |
|---|---|
| Pt | 4.5 |
| Rh | 1.0 |
| $CeO_2$ | 90 |
| Ce-Pr-La-Ox | 90 |
| Zr-Nd-Ox | 50 |
| $Al_2O_3$ | 30 |

Example 5

The NOx purification catalyst of a one-layer configuration shown in Table 5 was prepared in accordance with processing similar to that of Example 1. After the NOx purification catalyst was aged under the conditions of actual equipment aging described above, the NOx purifying performance was evaluated under the conditions of Evaluation described above. Average values of NOx purification rates at 200°C, 300°C and 400°C are shown in FIG. 4.

Table 5

| Component | Proportion (g/L) |
|---|---|
| Pt | 4.5 |
| Rh | 1.0 |
| $CeO_2$ | 90 |
| $La_2O_3$ | 30 |
| Ce-Pr-La-Ox | 90 |
| Zr-Nd-Ox | 50 |
| $Al_2O_3$ | 30 |

Example 6

The NOx purification catalyst of a one-layer configuration shown in Table 6 was prepared in accordance with processing similar to that of Example 1. The catalyst was prepared using the method described above, and the NOx purifying capability was evaluated using the evaluation method of Evaluation described above. The results are shown in FIG. 3.

Table 6

| Component | Proportion (g/L) |
|---|---|
| Pt | 4.5 |
| $CeO_2$ | 90 |
| Ce-Pr-La-Ox | 90 |
| Zr-Nd-Ox | 50 |
| $Al_2O_3$ | 30 |

Example 7

The NOx purification catalyst of a one-layer configuration shown in Table 7 was prepared in accordance with processing similar to that of Example 2. The catalyst was prepared using the method described above, and the NOx purifying performance was evaluated using the evaluation method of Evaluation described above. The results are shown in FIG. 3.

Table 7

| | Component | Proportion (g/L) |
|---|---|---|
| Upper layer | Fe, Ce, and La ion-exchanged β-zeolite | 75 |
| | $Al_2O_3$ | 7 |
| | Binder | 8 |
| Lower layer | Pt | 4.5 |
| | $CeO_2$ | 60 |
| | Ce-Pr-La-Ox | 60 |
| | Zr-Nd-Ox | 20 |
| | $Al_2O_3$ | 30 |

Comparative Example 1

(a) An alumina powder and an alumina binder (manufactured by Nissan Chemical Industries, Ltd.) were mixed to obtain a slurry. A honeycomb support was immersed into the slurry and then rapidly raised, and the liquid closing the cells was removed by compressed air, followed by heating the honeycomb support at 200°C for 2 hours. The processing was repeated until a predetermined loading amount was obtained. After the predetermined loading amount was obtained, the honeycomb support was calcined at 500°C for 2 hours in a muffle furnace. Alumina of 150 g/L was coated in this way.

(b) Next, the alumina-carrying honeycomb support prepared in (a) was immersed into a mixed solution obtained by mixing cerium nitrate, sodium nitrate, potassium nitrate, and titania sol in a ratio of cerium : sodium : potassium : titanium = 6 : 3 : 3 : 4 (mass ratio) and adding ion-exchanged water. Then, the honeycomb support was pulled out from the slurry and an amount in excess was removed by air jet, followed by heating the honeycomb support at 200°C for 2 hours. The processing was repeated until a predetermined loading amount was obtained. After the predetermined loading amount was obtained, the honeycomb support was calcined at 600°C for 1 hour in a muffle furnace.

(c) Next, a dinitro diammine platinum nitric acid solution and a rhodium nitrate solution were mixed and ion-exchanged water was added to obtain a mixed solution. The honeycomb support prepared in (b) was immersed into this solution. Then, the honeycomb support was pulled out from the mixture solution and an amount in excess was removed by air jet, followed by heating the honeycomb support at 200°C for 2 hours. The processing was repeated until a predetermined loading amount was obtained. After the predetermined loading amount was obtained, the honeycomb support was calcined at 450°C for 1 hour in a muffle furnace.

(d) Finally, ion-exchanged water was added to magnesium nitrate to obtain a slurry. The honeycomb support prepared in (c) was immersed into the slurry. Then, the honeycomb support was pulled out from the mixture solution and an amount in excess was removed by air jet, followed by heating the honeycomb support at 200°C for 2 hours. The processing was repeated until a predetermined loading amount was obtained. After the predetermined loading amount was obtained, the honeycomb support was calcinated at 450°C for 1 hour in a muffle furnace. Consequently, $2.7Mg-(3.8Pt-0.2Rh)-(10Ce-5Na-5K-6.7Ti)/Al_2O_3$ was obtained. The values before elemental symbols are the weight (g) of the represented metal component supported per 1 L of honeycomb outer volume. The display order indicates the supporting order, i.e. the components were supported in the order from one displayed adjacent $Al_2O_3$ to ones displayed apart from $Al_2O_3$, and the components in ( ) were supported at the same time. The catalyst was prepared using the method described above, and the NOx purifying performance was evaluated using the evaluation method of Evaluation described above. The results are shown in FIG. 3.

Example 8

After the NOx purification catalyst of Example 6 was aged under the conditions of actual equipment aging described above, the NOx purifying performance was evaluated under the conditions of Evaluation described above. Average values of NOx purification rates at 200°C, 300°C and 400°C are shown in FIG. 4.
In FIG. 3 showing the relation between temperature and NOx purification rate, the abscissa axis is catalyst temperature and the vertical axis is NOx purification rate (volume %). As shown in FIG. 3, catalysts of the Examples achieve higher NOx purification rates compared to that of the Comparative Example at low to medium temperatures of 170°C to 400°C under lean/rich control. This demonstrates that the NOx purification catalysts of the Examples can efficiently purify NOx even when running is performed at low to medium temperatures.
It has also been confirmed that higher NOx purification rates can be attained in accordance with the Examples, even after undergoing actual equipment aging as demonstrated in FIG. 4 showing averages of NOx purification rates after actual equipment aging.
A NOx purification catalyst is provided capable of suppressing degradation of NOx purifying performance due to a sulfur component and efficiently purifying NOx even in cases where running is performed under low to medium temperatures. The NOx purification catalyst provided, which is used to purify NOx in exhaust gas emitted from an internal combustion engine in which lean/rich control is carried out, has a first catalyst layer that is supported on a carrier and includes a noble metal containing at least platinum as a main component, a cerium-containing material, and a lanthanum-containing material, in which NOx is oxidized and adsorbed to the first catalyst layer when made to a lean condition, and NOx oxidized and adsorbed to the first catalyst layer in a lean condition is converted into nitrogen and water when made to a rich condition by a reducing component present near the first catalyst layer.

**Claims**

1. A NOx purification catalyst, which is used to purify NOx in exhaust gas emitted from an internal combustion engine in which lean/rich control is performed, the NOx purification catalyst comprising:

   a first catalyst layer that is supported on a carrier and includes a noble metal containing at least platinum as a main component, a cerium-containing material, and a lanthanum-containing material,

   wherein NOx in exhaust gas is oxidized and adsorbed to the first catalyst layer when made to a lean condition, and wherein NOx oxidized and adsorbed to the first catalyst layer in a lean condition is converted into nitrogen and water by way of a reducing component existing near the first catalyst layer when made to a rich condition.

2. The NOx purification catalyst according to claim 1, wherein the noble metal included in the first catalyst layer comprises rhodium as an auxiliary component.

3. The NOx purification catalyst according to claim 1 or 2, wherein the content of the lanthanum-containing material included in the first catalyst layer per unit volume is 1 g/L to 100 g/L.

4. The NOx purification catalyst according to any one of claims 1 to 3, wherein the total content of noble metal per unit volume is 0.1 g/L to 20 g/L.

5. The NOx purification catalyst according to any one of claims 1 to 4, further comprising:

   a second catalyst layer that is formed as a layer on or mixed with the first catalyst layer and includes a solid acid, which is ion-exchanged and/or mixed with a metal and has ammonia adsorption capability,

wherein NOx in exhaust gas is oxidized and adsorbed to the first catalyst layer when made to a lean condition, wherein NOx oxidized and adsorbed to the first catalyst layer in a lean condition is converted into nitrogen, water, and ammonia in rich condition by a reducing component present near the first catalyst layer, and the ammonia is adsorbed to the second catalyst layer, and

wherein ammonia adsorbed to the second catalyst layer in a rich condition reacts with NOx in exhaust gas, and is converted into nitrogen and water when made to a lean condition again.

6. The NOx purification catalyst according to claim 5, wherein the solid acid in the second catalyst layer is at least one selected from the group consisting of β-zeolites, Y-type zeolites, ferrierites, mordenites, and MFI-type zeolites.

7. The NOx purification catalyst according to claim 5 or 6, wherein the metal in the second catalyst layer is at least one selected from the group consisting of iron, copper, cerium, and lanthanum.

8. The NOx purification catalyst according to any one of claims 1 to 7, wherein the reducing component is at least one selected from the group consisting of carbon monoxide, hydrocarbons, and hydrogen.

9. The NOx purification catalyst according to any one of claims 1 to 8, wherein the first catalyst layer further comprises a heat-resistant inorganic oxide.

10. The NOx purification catalyst according to claim 9, wherein the heat-resistant inorganic oxide is at least one selected from the group consisting of a zirconium oxide-containing material, an alumina-containing material, a zeolite-containing material, and a silica-containing material.

11. The NOx purification catalyst according to claim 10, wherein the zirconium oxide-containing material is at least one selected from the group consisting of zirconium oxide, a zirconium-containing composite oxide, and a composite oxide of zirconium and a rare-earth element.

12. The NOx purification catalyst according to any one of claims 1 to 11, wherein the lanthanum-containing material is at least one selected from the group consisting of lanthanum metal, lanthanum oxide, a lanthanum-containing composite oxide, and a composite oxide of lanthanum and a rare-earth element.

13. The NOx purification catalyst according to any one of claims 1 to 12, wherein the cerium-containing material is at least one selected from the group consisting of cerium metal, cerium oxide, a cerium-containing composite oxide, and a composite oxide of cerium and a rare-earth element.

14. The NOx purification catalyst according to any one of claims 1 to 13, wherein the content of the noble metal in the first catalyst layer decreases gradually or stepwise from a surface side to a side of the carrier.

FIG. 1

EP 2 153 896 A1

# FIG. 2

# FIG. 3

TEMPERATURE RANGE OF
DIESEL EXHAUST GAS

NORMAL OPERATING
TEMPERATURE RANGE
OF DIESEL EXHAUST GAS

NOx PURIFICATION RATE (%)

TEMPERATURE (°C)

—◆— EXAMPLE1
—■— EXAMPLE2
—▲— EXAMPLE6
—●— EXAMPLE7
—✻— COMPARATIVE
EXAMPLE 1

# FIG. 4

Europäisches
Patentamt

European
Patent Office

Office européen
des brevets

# EUROPEAN SEARCH REPORT

Application Number

EP 09 16 6556

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | EP 2 048 333 A (HONDA MOTOR CO LTD [JP]) 15 April 2009 (2009-04-15) * abstract * * paragraphs [0011], [0014], [0020], [0021], [0024] - [0031], [0063], [0065], [0066], [0070], [0072], [0073], [0075], [0076], [0079], [0085] * * tables 1,2 * | 1-14 | INV. B01J23/46 B01J29/72 B01J35/00 B01J37/02 B01D53/94 F01N3/08 F01N3/28 B01J23/63 |
| X | & WO 2008/015992 A (HONDA MOTOR CO LTD [JP]; SATOH NAOHIRO [JP]; YAMAMOTO OSAMI [JP]; INAB) 7 February 2008 (2008-02-07) * the whole document * | 1-14 | |
| X | EP 1 685 891 A (VALTION TEKNILLINEN [FI]; HONDA MOTOR CO LTD [JP] HONDA MOTOR CO LTD [) 2 August 2006 (2006-08-02) * abstract * * paragraphs [0017], [0031], [0035], [0039], [0053], [0059] * * example 15 * preparation examples 15, 16 | 1-14 | |
| X | EP 1 889 651 A (HONDA MOTOR CO LTD [JP]) 20 February 2008 (2008-02-20) * abstract * * paragraphs [0016], [0020], [0022], [0024], [0027] - [0029], [0037], [0041], [0048], [0051] * * example 1 * | 1-14 | TECHNICAL FIELDS SEARCHED (IPC) B01J B01D F01N |

The present search report has been drawn up for all claims

| Place of search | Date of completion of the search | Examiner |
|---|---|---|
| Munich | 14 December 2009 | Schnitzlbaumer, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 16 6556

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2009

| Patent document cited in search report | | Publication date | Patent family member(s) | | Publication date |
|---|---|---|---|---|---|
| EP 2048333 | A | 15-04-2009 | CN | 101495724 A | 29-07-2009 |
| | | | JP | 2008031970 A | 14-02-2008 |
| | | | WO | 2008015992 A1 | 07-02-2008 |
| WO 2008015992 | A | 07-02-2008 | CN | 101495724 A | 29-07-2009 |
| | | | EP | 2048333 A1 | 15-04-2009 |
| | | | JP | 2008031970 A | 14-02-2008 |
| EP 1685891 | A | 02-08-2006 | WO | 2005044426 A1 | 19-05-2005 |
| | | | US | 2007274889 A1 | 29-11-2007 |
| EP 1889651 | A | 20-02-2008 | CN | 101116825 A | 06-02-2008 |
| | | | JP | 4294041 B2 | 08-07-2009 |
| | | | JP | 2008030003 A | 14-02-2008 |
| | | | US | 2008026932 A1 | 31-01-2008 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008197311 A
- JP 2586738 B
- JP 2600492 B
- WO 2005044426 PCT

**Non-patent literature cited in the description**

- Development of NOx storage-reduction three-way catalyst system. *Society of Automotive Engineers of Japan,* October 1995, vol. 26 (4
- A NOx Reduction System Using Ammonia Storage-Selective Catalytic Reduction in Rich and Lean Poerations. *15. Aachener Kolloquium Fahrzeug-und Motorentechnik,* 2006, 259-270